# EUROPÄISCHE PATENTANMELDUNG

(11) **EP 3 666 435 A1**
(43) Veröffentlichungstag der Anmeldung: **17.06.2020**
(21) Anmeldenummer: 19208912.6
(22) Anmeldetag: 13.11.2019
(51) Int. Cl.: B23C 3/02, B23D 21/04, B23B 5/16, B23Q 9/00, B23D 79/02, B24B 23/08, B24B 27/033

(54) **SCHÄLGERÄT MIT ELEKTRISCHEM BATTERIEANTRIEB**

(30) Priorität: 13.11.2018 DE 202018106427 U
(71) Anmelder: PF Schweisstechnologie GmbH, 36304 Alsfeld (DE)
(72) Erfinder: Spychalski-Merle, Achim, 36304 Alsfeld (DE)
(74) Vertreter: Eisenführ Speiser

(57) **Zusammenfassung**

Bearbeitungsvorrichtung zum zumindest abschnittsweisen Bearbeiten der Mantelfläche eines wenigstens annähernd zylindrischen Gegenstands, enthaltend: mindestens zwei gelenkig miteinander zu einer ringförmigen Kette zum Umschließen des zu bearbeitenden Gegenstandes verbindbaren Kettengliedern mit Laufrollen zum Abrollen auf der Mantelfläche, und einen Werkzeugträger zum Tragen und Führen eines zum Bearbeiten der Mantelfläche ausgebildeten Werkzeugs, gekennzeichnet durch eine Kopplungseinrichtung mit einem Kupplungsteil zum Herstellen einer lösbaren Verbindung mit einem Motor zum Bewegen der Bearbeitungsvorrichtung in Umfangsrichtung des zu bearbeitenden Gegenstandes.

## Beschreibung

Die Erfindung betrifft eine kettenartige Vorrichtung zum Bearbeiten einer Mantelfläche eines Gegenstands, insbesondere eines wenigstens annähernd zylindrischen Gegenstands, wie z.B. eines Rohres, gemäß dem Oberbegriff des Anspruchs 1. Genauer betrifft die Erfindung eine Schälkette für rohrförmige Gegenstände, insbesondere Kunststoffrohre.

Die Oberfläche insbesondere eines Kunststoffrohres für beispielsweise die Gasversorgung muss vor einer Verbindung mit weiteren Rohren häufig bearbeitet werden. So ist es notwendig, bei der Verschweißung von derartigen Kunststoffrohren vor dem Verschweißen die Oberfläche der Rohre abzuschaben. Hierbei wird eine Schicht in der Größenordnung von ca. 0,05 mm bis 0,3 mm (in Abhängigkeit von großen Rohren auch tiefer) in den miteinander zu verschweißenden Bereichen entfernt. Auf diese Weise werden Schmutzeinschlüsse aus dem Herstellungsprozess sowie alterungsbedingte Materialveränderungen, die beispielsweise durch UV-Schädigung oder Witterung an der Oberfläche auftreten können, beseitigt, die sonst zu unzureichenden Schweißergebnissen führen würden. Rohrrollbundware weist herstellungsbedingt eine gewisse Ovalität auf, die auch bei Rohrstangenware durch längere Lagerungszeiten auftritt.

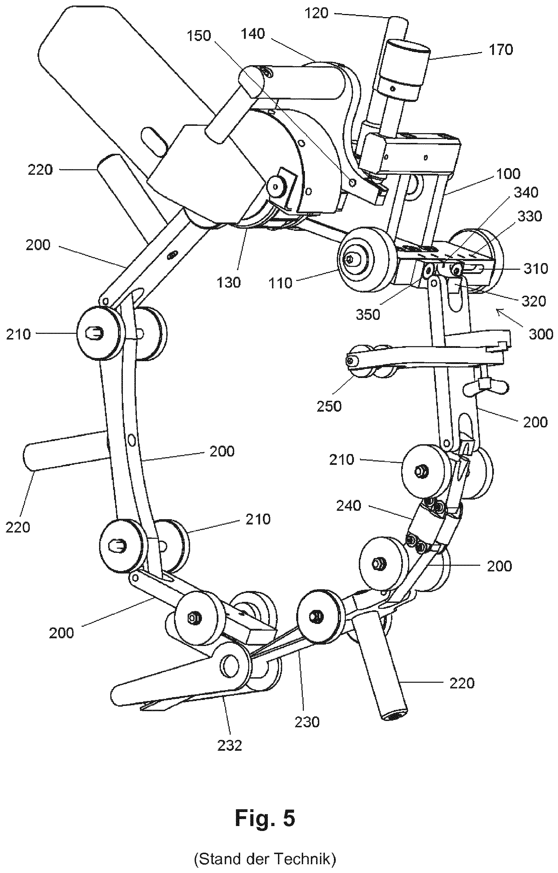

In der Praxis ist daher aus der deutschen Patentanmeldung 10 2014 006 255 eine Bearbeitungsvorrichtung in kettenartiger Form bekannt, auch Schälkette genannt, die in Fig. 5 gezeigt ist.

Fig. 5 zeigt eine schematische Schrägansicht einer solchen herkömmlichen Schälkette. Die Schälkette weist eine Kette mit Kettengliedern 100', 200' auf, die gelenkig miteinander verbunden sind, so dass sie einen geschlossenen Kettenring auf der Mantelfläche eines zu bearbeitenden Rohrs (nicht dargestellt) bilden. Ein Kettenglied ist ein Werkzeugträger 100', der zwei Paare an Laufrollen 110' zum Abrollen auf dem zu bearbeitenden Rohr und einen motorbetriebenen Hobel 130' zur Bearbeitung der Mantelfläche des Rohrs aufweist. Anstelle des motorbetriebenen Hobels 130' kann auch ein feststehendes Werkzeug, wie z.B. ein einstellbares Schälmesser, am Werkzeugträger 100' befestigt sein. Die übrigen Kettenglieder sind Kettenverbindungsglieder 200', die ebenfalls Laufrollen 210' aufweisen, um auf der Mantelfläche des Rohrs abzurollen. Ferner weist ein Kettenverbindungsglied 200' einen Spanngurt 230' und ein Spannschloss 232' auf, um die Umlauflänge des geschlossenen Kettenrings an den Umfang des Rohrs anzupassen. Eine Vorschubeinrichtung 300' ist am Werkzeugträger 100' vorgesehen, um den Vorschub lückenlos einzustellen. Auf diese Weise wird das Werkzeug in einer Schraubenlinie um die Mantelfläche des Rohrs geführt, um bei richtiger Einstellung des Vorschubs die Mantelfläche lückenlos zu bearbeiten. Um die Kette in Laufrichtung, d.h. in Umfangsrichtung um die Rohrachse, zu bewegen, sind die Kettenverbindungsglieder 200' mit Griffen 220' versehen, mit deren Hilfe eine Bedienungsperson die Kette von Hand bewegen kann.

Ferner beschreibt die DE 10 2014 006 255, dass der Werkzeugträger 100' und/oder das Kettenverbindungsglied 200' wenigstens eine Antriebsrolle aufweisen kann, die von einer ständig an der Schälkette verbleibenden Antriebseinrichtung angetrieben werden kann, um die Bearbeitungsvorrichtung in Umfangsrichtung des zu bearbeitenden Gegenstandes zu bewegen. Auf diese Weise soll ein besonders gleichmäßiger Umlauf der Kette um den zu bearbeitenden Gegenstand und ein besonders gleichmäßiger Vorschub erreicht werden, so dass unabhängig von der Bedienungsperson eine optimal gleichmäßige Bearbeitung der Mantelfläche möglich ist.

Diese vorbekannte Bearbeitungsvorrichtung erweist sich auf Grund des ständig an der Schälkette verbleibenden Antriebs als verhältnismäßig schwer und damit unhandlich. Daher ist ihre Anbringung auf einem zu bearbeitenden Rohr aufwendig.

Eine Aufgabe der vorliegenden Erfindung besteht darin, eine verbesserte Bearbeitungsvorrichtung nach dem Oberbegriff des Anspruchs 1 bereitzustellen. Insbesondere besteht die Aufgabe darin, eine Bearbeitungsvorrichtung bereitzustellen, die leicht und auf einfache Weise durch eine Bedienungsperson auf dem zu bearbeitenden Gegenstand aufgesetzt und wieder abgenommen werden kann.

Diese Aufgabe wird erfindungsgemäß gelöst durch eine Bearbeitungsvorrichtung gemäß dem unabhängigen Anspruch 1, ein Kettenglied gemäß dem unabhängigen Anspruch 12 und einen Bausatz gemäß dem unabhängigen Anspruch 14. Vorteilhafte Weiterentwicklungen der erfindungsgemäßen Bearbeitungsvorrichtung, des erfindungsgemäßen Kettenglieds bzw. des erfindungsgemäßen Bausatzes sind in den abhängigen Ansprüchen definiert.

In einem ersten Aspekt betrifft die vorliegende Erfindung eine Bearbeitungsvorrichtung zum zumindest abschnittsweisen Bearbeiten der Mantelfläche eines wenigstens annähernd zylindrischen Gegenstands mit mindestens zwei gelenkig miteinander zu einer ringförmigen Kette zum Umschließen des zu bearbeitenden Gegenstandes verbindbaren Kettengliedern, mit Laufrollen zum Abrollen auf der Mantelfläche und einen Werkzeugträger zum Tragen und Führen eines zum Bearbeiten der Mantelfläche ausgebildeten Werkzeugs, gekennzeichnet durch eine Kopplungseinrichtung mit einem Kupplungsteil zum Herstellen einer lösbaren Verbindung mit einem Motor zum Bewegen der Bearbeitungsvorrichtung in Umfangsrichtung des zu bearbeitenden Gegenstandes.

Das Kupplungsteil ermöglicht es, die Bearbeitungsvorrichtung mit einer universellen Antriebsmöglichkeit bereitzustellen. Dadurch kann für den Betrieb auf bereits vorliegende, insbesondere handelsübliche Antriebe zurückgegriffen werden, und es ist unnötig, die Bearbeitungsvorrichtung mit einem eigens entwickelten Motor auszustatten. Hierdurch verringert sich das Gewicht sowie die Kosten für eine Bearbeitungsvorrichtung. Durch das geringe Gewicht ist auch das Aufsetzen und Abnehmen der Bearbeitungsvorrichtung auf einfache Weise möglich. Sollte ein Fehler oder eine Beschädigung des Motors auftreten, kann der Motor einfach abgenommen und getauscht werden. Darüber hinaus können andere fehleranfällige Bauteile durch Abnahme des Motors zugänglich gemacht werden. Hierdurch kann effektiv einer befürchteten Fehleranfälligkeit entgegengewirkt werden und führt nicht zu langen Ausfallzeiten. Demnach ist es in einer bevorzugten Ausführungsform vorgesehen, dass das Kupplungsteil derart ausgebildet ist, dass es mit handelsüblichen, gängigen oder genormten antriebsseitigen Kupplungsgegenteilen verbunden werden kann.

Als weiterer Vorteil ergibt sich durch das erfindungsgemäße Kupplungsteil insbesondere auch, dass der Anschluss eines kabellosen Motors ermöglicht wird. Dadurch ist es nicht mehr nötig, das Kabel aufwendig während oder nach dem Bearbeiten von dem bearbeiteten Rohr abzuwickeln. Somit ist es möglich, ein Rohr ohne manuelles Eingreifen einer Bedienungsperson vollständig zu bearbeiten.

Ebenso ist es vorteilhafterweise möglich, einen Adapter vorzusehen, der das Kupplungsteil mit dem antriebsseitigen Kupplungsgegenteil verbindet. So kann vorteilhafterweise die Bearbeitungsvorrichtung mit Motoren, die unterschiedliche Kupplungsgegenteile aufweisen, betrieben werden, ohne dass konstruktive Änderungen an der Antriebseinrichtung notwendig sind.

Der Werkzeugträger kann auf demselben Kettenglied wie die Kopplungseinrichtung angeordnet sein. Vorzugsweise sind Werkzeugträger und Kopplungseinrichtung auf verschiedenen Kettengliedern vorgesehen.

In einer bevorzugten Ausführungsform ist die Antriebsrolle ausgestaltet, die Kopplungseinrichtung von der Mantelfläche des zu bearbeitenden Gegenstandes abzustützen. Mit anderen Worten übernimmt gemäß dieser Ausführungsform die Antriebsrolle die Funktion von Laufrollen, so dass ein Abrollen der Bearbeitungsvorrichtung über die Antriebsrolle ein Schleifen der Kopplungseinrichtung und/oder eines Kettenglieds verhindert, an dem die Kopplungseinrichtung befestigt ist. Vorteilhafterweise kann dadurch auf Laufrollen verzichtet werden und die Anzahl der für einen einwandfreien Betrieb notwendigen Teile der Bearbeitungsvorrichtung kann reduziert werden. Demnach ist weiterhin bevorzugt, dass die Antriebsrolle an einem Kettenglied ohne Laufrollen befestigt ist.

In einer Weiterentwicklung der Bearbeitungsvorrichtung weist die Kopplungseinrichtung ferner eine mit einer Antriebswelle drehfest verbundene Antriebsrolle und eine Lagereinrichtung zur rotierenden Lagerung der Antriebswelle auf. Vorzugsweise ist die Antriebswelle koaxial zur Antriebsrolle angeordnet. Dabei verläuft vorzugsweise die Rotationsachse der Antriebsrolle im Wesentlichen parallel zur zentralen Achse des geschlossenen Kettenrings. Auf diese Weise ergibt sich vorteilhaft, dass sich die Kette gleichmäßig und exakt in Umlaufrichtung bewegt und ein seitliches Gleiten der Antriebsrollen verhindert wird.

In einer bevorzugten Ausführungsform ist die Lagereinrichtung drehfest und vorzugsweise starr mit einem ersten Kupplungselement des Kupplungsteils verbunden. Dadurch kann der Motor mittels des Kupplungsteils gegen eine Rotationsbewegung um die Rotationsachse stabilisiert werden.

In einer bevorzugten Ausführungsform der Bearbeitungsvorrichtung weist die Lagereinrichtung mindestens einen und vorzugsweise mindestens zwei zur Rotationsachse der Antriebsrolle schräg, insbesondere im Wesentlichen senkrecht, stehende Lagerschenkel zur rotierenden Lagerung der Antriebswelle auf. Weiterhin ist das erste Kupplungselement des Kupplungsteils mit zumindest einem Lagerschenkel drehfest und vorzugsweise starr verbunden. Vorzugsweise ist der oder sind die Lagerschenkel schräg, insbesondere im Wesentlichen senkrecht, zur Rotationsachse flächig ausgebildet. Der oder die Lagerschenkel dienen somit sowohl der Lagerung der Antriebswelle, als auch der Stabilisierung des Motors gegen Rotation um die Rotationsachse. Auf diese Weise kann die Zahl der benötigten Bauteile reduziert werden.

In einer bevorzugten Ausführungsform ist das erste Kupplungselement bezüglich der Antriebswelle unbeweglich. Ferner weist das Kupplungsteil vorzugsweise ein mit der Antriebswelle drehfest verbundenes und rotierbares zweites Kupplungselement zur Aufnahme der Rotationsbewegung auf. In einer konkreten Ausgestaltung ist der oder sind die Lagerschenkel an einem ersten Kettenglied der mindestens zwei Kettenglieder angebracht. In dieser konkreten Ausgestaltung ist vorzugsweise weiterhin mindestens das erste Kupplungselement des Kupplungsteils mit zumindest einem der Lagerschenkel zumindest drehfest und insbesondere starr verbunden. Dadurch ergibt sich vorteilhafterweise, dass der Motor nur mit dem Kupplungsteil verbunden werden muss, um die Rotationsbewegung auf die Antriebseinheit zu übertragen und gleichzeitig gegen eine Rotationsbewegung um die Rotationsachse stabilisiert zu werden.

In einer bevorzugten Ausführungsform ist je ein Lagerschenkel einer Stirnseite der Antriebsrolle zugewandt und mittels Abstandshalter von den Stirnseiten beabstandet. Dadurch kann einerseits ein freier Lauf der Antriebsrolle gewährleistet werden und andererseits eine hohe Stabilität der Antriebseinrichtung erreicht werden.

In einer weiteren unabhängigen Weiterentwicklung der Bearbeitungsvorrichtung ist der Abstand der Lagereinrichtung von der Mantelfläche mittels einer Verstelleinrichtung veränderbar und optional mittels einer Arretiereinrichtung feststellbar. Hierzu weisen die mindestens zwei Kettenglieder die Verstelleinrichtung und optional die Arretiereinrichtung auf. Als Vorteil ergibt sich, dass ein einwandfreies Bearbeitungsergebnis auch bei Schwankungen in der Fertigungsgenauigkeit oder einem Abtragen der Lauffläche der Antriebsrolle erreicht werden kann.

In einer weiteren bevorzugten Ausführungsform der Bearbeitungsvorrichtung ist die Lagereinrichtung an einem ersten Kettenglied der mindestens zwei Kettenglieder verschwenkbar gelagert. In einer konkreten Ausgestaltung ist der Lagerschenkel oder sind die Lagerschenkel am dem ersten Kettenglied verschwenkbar gelagert. Auf diese Weise kann der Abstand der Antriebsrolle von der Mantelfläche durch Verschwenken eingestellt werden. Durch weiteres Verschwenken ist außerdem ein einfaches Wechseln der Antriebsrolle möglich.

In einer weiteren Ausführungsform der Bearbeitungsvorrichtung ist vorgesehen, dass die Lagereinrichtung, zusätzlich oder alternativ zur Schwenkbarkeit, neigbar ist.

In einer weiteren bevorzugten Ausführungsform der Bearbeitungsvorrichtung umfassen die mindestens zwei Kettenglieder außerdem ein oder mehrere Kettenverbindungsglieder. Hierdurch ist es möglich, die Kette an nahezu beliebige Rohrdurchmesser anzupassen. In einer bevorzugten Ausführungsform der Bearbeitungsvorrichtung weist wenigstens ein Kettenverbindungsglied Laufrollen zum Abrollen auf der Mantelfläche des zu bearbeitenden Gegenstandes auf. Auf diese Weise kann die Kette leicht und gleichmäßig über die Mantelfläche rollen.

In einer weiteren unabhängigen Weiterentwicklung der Bearbeitungsvorrichtung weisen die mindestens zwei Kettenglieder eine Abtasteinrichtung zur Bestimmung des Querschnittsendes oder eines Querschnittendpunktes des zu bearbeitenden Gegenstandes auf. Vorzugsweise ist die Abtasteinrichtung bezüglich des Werkzeugs derart ausrichtbar, dass eine Signaländerung bestimmbar ist, wenn das Werkzeug das Querschnittsende gerade erreicht hat oder einen vorbestimmten Abstand davon hat. Alternativ oder zusätzlich ist die Abtasteinrichtung derart ausgestaltet, dass sie Änderungen in der Mantelflächentopologie erfasst. So können beispielsweise der Bearbeitungsendpunkt oder Deformationen des zu bearbeitenden Rohrs während des Bearbeitens automatisch erfasst werden. Beispielsweise kann die Abtasteinrichtung ein Signal erfassen und verarbeiten, das sich in Abhängigkeit der Auflagefläche wie der Manteloberfläche des zu bearbeitenden Rohres ändert, indem die Abtasteinrichtung einen Sender zur Aussendung eines vorzugsweise elektromagnetischen Signals und einen Empfänger umfasst, der ein von der Auflagefläche reflektiertes Signal erfassen kann, wenn das Querschnittsende des Rohres nicht erreicht ist. Alternativ können Sender und Empfänger auf gegenüberliegenden Seiten der ringförmigen Kette angeordnet sein. In diesem Fall wird das Querschnittsende des Rohrs bestimmt, wenn der Empfänger ein von dem gegenüberliegenden Sender ausgesendetes Signal erfasst. Vorzugsweise ist die Abtasteinrichtung bezüglich des Werkzeugs derart ausgerichtet, dass eine Signaländerung bestimmbar ist, wenn das Werkzeug das Querschnittsende gerade erreicht hat oder in Kürze erreichen wird.

Optional befindet sich die Abtasteinrichtung wenigstens teilweise (d.h. beispielsweise zumindest der Sender oder der Empfänger) auf demselben Kettenglied wie der Werkzeugträger. Alternativ kann sich die Abtasteinrichtung vollständig oder teilweise auf einem Kettenverbindungsglied befinden.

In einer bevorzugten Ausführungsform ist die Abtasteinrichtung mit einer Abschalteinrichtung funktional gekoppelt. Auf diese Weise kann bei einer erfassten Signaländerung (bspw. Rohrende erreicht oder Rohr stark deformiert) automatisch die Rotationsbewegung der Laufrolle verändert, vorzugsweise verlangsamt oder angehalten werden.

In einer bevorzugten Ausführungsform ist die der Mantelfläche zugewandte Lauffläche der Antriebsrolle zumindest teilweise gummiert. Dadurch kann ein Schlupf auf der Mantelfläche des Rohrs vermieden werden. Für die Zwecke der vorliegenden Erfindung ist es jedoch nicht zwingend notwendig eine Gummierung vorzusehen. Wesentlich ist vielmehr, dass die Lauffläche derart beschaffen ist, dass die Haftreibung der Lauffläche in Bezug auf die Auflagefläche ausreichend hoch ist. Dies kann durch entsprechende Wahl des Materials und/oder einer Profilierung der Lauffläche (z.B. Riffelung) erreicht werden.

In einer weiteren unabhängigen Weiterentwicklung der Bearbeitungsvorrichtung weisen die mindestens zwei Kettenglieder eine Spanneinrichtung zum Anpassen der Umlauflänge der Bearbeitungsvorrichtung an den Umfang des zu bearbeitenden Gegenstands und/oder zum Einstellen des Anpressdrucks der Bearbeitungsvorrichtung auf die Mantelfläche auf. Die Spanneinrichtung kann vorzugsweise einen Spanngurt und ein Spannschloss umfassen, oder kann beispielsweise einen Gewindestangen-Mechanismus umfassen. Optional befindet sich die Spanneinrichtung wenigstens teilweise auf demselben Kettenglied wie der Werkzeugträger. Alternativ kann sich die Spanneinrichtung auf einem Kettenverbindungsglied befinden.

In einer weiteren unabhängigen Weiterentwicklung der Bearbeitungsvorrichtung weisen die mindestens zwei Kettenglieder eine Vorschubeinstelleinrichtung auf, die in der Lage ist, eine axiale Position von zueinander weisenden Enden zweier Kettenglieder parallel zur Achse des geschlossenen Kettenrings zueinander reversibel zu verstellen. Bei einem vollständigen Umlauf ergibt sich somit ein Vorschub der Bearbeitungsvorrichtung in axialer Richtung ungefähr gleich dem axialen Versatz der einander zugewandten Enden der Kettenglieder an der Vorschubeinstelleinrichtung. Dabei tritt an den Laufrollen im Wesentlichen kein seitlicher bzw. axialer Schlupf auf und alle aufsitzenden Laufrollen tragen zum Vorschub bei. Auf diese Weise ergibt sich ein sehr zuverlässiger und gleichmäßiger Vorschub in axialer Richtung, wobei auch der Kraftaufwand für die Bewegung in Umfangsrichtung im Vergleich zur herkömmlichen Schälkette deutlich reduziert ist, da kein axiales Gleiten von Laufrollen quer zur Umfangsrichtung erzwungen werden muss.

Optional befindet sich die Vorschubeinrichtung wenigstens teilweise auf demselben Kettenglied wie die Antriebseinrichtung. Alternativ kann sich die Vorschubeinrichtung auf einem Kettenverbindungsglied befinden.

Der Werkzeugträger kann dafür konfiguriert sein, ein austauschbares feststehendes Werkzeug, insbesondere ein spanabhebendes Werkzeug, vorzugsweise in einstellbarer Lage über die Mantelfläche zu führen, um die Mantelfläche zu bearbeiten. Alternativ kann der Werkzeugträger dafür konfiguriert sein, ein austauschbares motorbetriebenes Werkzeug, insbesondere ein rotierendes spanabhebendes Werkzeug, in der einstellbaren Lage über die Mantelfläche zu führen, um die Mantelfläche zu bearbeiten. Hierdurch kann eine besonders einfache Handhabung bei gleichzeitig optimiertem Bearbeitungsergebnis erzielt werden, wobei ein besonders niedriger Kraftaufwand erforderlich ist, um die Kette in Umlaufrichtung um den zu bearbeitenden Gegenstand zu bewegen, da das Werkzeug selbst eine sehr geringe Widerstandskraft entgegensetzt. Ferner kann der Werkzeugträger eine Aufhängungseinrichtung für das motorbetriebene Werkzeug aufweisen, die in der Lage ist, das Werkzeug auf die Mantelfläche aufzusetzen und von dieser abzuheben und dabei eine Rotationsachse des motorbetriebenen Werkzeugs im Wesentlichen parallel zur Achse des geschlossenen Kettenrings zu halten. Optional kann diese Aufhängungseinrichtung eine Federeinrichtung aufweisen, die das motorbetriebene Werkzeug elastisch in Richtung zur der Mantelfläche drängt. In einer unabhängigen Weiterentwicklung dieses Aspekts kann die Aufhängungseinrichtung eine Absenkeinrichtung aufweisen, die das motorbetriebene Werkzeug in kontrollierten Bewegungen von der Mantelfläche abheben und auf die Mantelfläche aufsetzen kann und eine unkontrollierte Absenkbewegung verhindert. Optional kann die Aufhängungseinrichtung ferner in der Lage sein, das Werkzeug zusätzlich um eine in Tangentialrichtung zur Mantelfläche verlaufende Achse zu kippen.

Während der Motor in den vorgenannten Ausführungsformen ein optionaler Bestandteil der Bearbeitungsvorrichtung darstellt, sieht eine weitere unabhängige Weiterentwicklung vor, dass die Bearbeitungsvorrichtung mit dem Motor verbunden ist. Zu diesem Zweck weist der Motor ein Kupplungsgegenteil zum Verbinden mit dem Kupplungsteil der Kopplungseinrichtung bzw. Antriebseinheit auf. Wie oben beschrieben ist es alternativ möglich, einen Adapter vorzusehen, der das Kupplungsteil mit dem Kupplungsgegenteil verbindet. So kann vorteilhafterweise die Bearbeitungsvorrichtung mit Motoren, die unterschiedliche Kupplungsgegenteile aufweisen, betrieben werden, ohne dass konstruktive Änderungen an der Kette notwendig sind. In einer weiteren Ausführungsform weist die Bearbeitungsvorrichtung demnach einen derartigen Adapter auf.

In einer bevorzugten Ausführungsform weist das Kupplungsgegenteil ein bezüglich der Rotationsachse des Motors unbewegliches erstes Kupplungsgegenelement und ein mit dem Motor rotierbares zweites Kupplungsgegenelement auf. Ferner kann das erste Kupplungselement mit dem ersten Kupplungsgegenelement und das zweite Kupplungselement mit dem zweiten Kupplungsgegenelement in Eingriff gebracht werden. Dadurch ergibt sich vorteilhafterweise, dass allein die Verbindung von Kupplungsteil und Kupplungsgegenteil genügt, um die Rotationsbewegung auf die Antriebseinheit zu übertragen ohne den Motor gegen eine Rotationsbewegung um die Rotationsachse anderweitig stabilisieren zu müssen.

In einerweiteren unabhängigen Weiterentwicklung der Bearbeitungsvorrichtung ist der Motor ein Elektromotor und/oder kabellos. In einer besonders bevorzugten Ausführungsform ist der Motor ein akkubetriebener Bauschrauber.

In einer weiteren unabhängigen Weiterentwicklung ist das Werkzeug kabellos betreibbar. Vorzugsweise sind sowohl der Motor als auch das Werkzeug kabellos. Insbesondere ist es bevorzugt, dass die gesamte Bearbeitungsvorrichtung keine kabelgebundenen Geräte aufweist. Dies ermöglicht vorteilhafterweise ein Betreiben der Bearbeitungsvorrichtung, ohne dass Kabel aufwendig während oder nach dem Bearbeiten von dem bearbeiteten Rohr abgewickelt werden müssen. Auf diese Weise kann ein Rohr ohne manuelles Eingreifen einer Bedienungsperson vollständig bearbeitet werden.

In einem zweiten Aspekt betrifft die vorliegende Erfindung ein Kettenglied für eine Bearbeitungsvorrichtung zum zumindest abschnittsweisen Bearbeiten der Mantelfläche eines wenigstens annähernd zylindrischen Gegenstands, das vorzugsweise mindestens ein Paar Laufrollen zum Abrollen auf der Mantelfläche und eine Kopplungseinrichtung aufweist, wobei die Kopplungseinrichtung ein Kupplungsteil zum Herstellen einer lösbaren Verbindung mit einem Motor und Übertragen der Rotationsbewegung vom Motor auf die Kopplungseinrichtung zur Bewegung der Bearbeitungsvorrichtung in Umfangsrichtung des zu bearbeitenden Gegenstandes aufweist.

In einer bevorzugten Ausgestaltung des zweiten Aspekts ist die Kopplungseinrichtung ausgestaltet wie hier näher beschrieben.

In einem dritten Aspekt betrifft die vorliegende Erfindung einen Bausatz zum Herstellen einer Bearbeitungsvorrichtung zum zumindest abschnittsweisen Bearbeiten der Mantelfläche eines wenigstens annähernd zylindrischen Gegenstands, umfassend ein erstes Kettenglied, das einen Werkzeugträger zum Tragen und Führen eines Werkzeugs zum Bearbeiten der Mantelfläche aufweist, ein zweites Kettenglied, das eine Kopplungseinrichtung umfasst, wobei die Kopplungseinrichtung ein Kupplungsteil zum Herstellen einer lösbaren Verbindung mit einem Motor und Übertragen der Rotationsbewegung vom Motor auf die Kopplungseinrichtung zur Bewegung der Bearbeitungsvorrichtung in Umfangsrichtung des zu bearbeitenden Gegenstandes aufweist, und optional ein oder mehr Kettenglieder als Kettenverbindungsglieder. Vorzugsweise sind die Kettenglieder gelenkig miteinander zu einer ringförmigen Kette zum Umschließen des zu bearbeitenden Gegenstandes verbindbar und weisen wenigstens teilweise Laufrollen zum Abrollen auf der Mantelfläche auf.

In einer bevorzugten Ausgestaltung des dritten Aspekts umfasst der Bausatz ferner den Motor und optional eine Fixiereinrichtung zur Einstellung der Motordrehzahl des Motors.

In einer unabhängigen bevorzugten Ausgestaltung des dritten Aspekts ist/sind die Kopplungseinrichtung und/oder der Motor ausgestaltet wie hier näher beschrieben.

Weitere vorteilhafte Ausgestaltungen sowie ein Ausführungsbeispiel werden nachstehend im Zusammenhang mit der Beschreibung einer Ausführungsform in Verbindung mit den beigefügten Zeichnungsfiguren näher erläutert. Die bei der Beschreibung des Ausführungsbeispiels ggfs. verwendeten Begriffe "oben", "unten", "links" und "rechts" beziehen sich auf die Zeichnungsfiguren in einer Ausrichtung mit normal lesbaren Bezugszeichen und Figurenbezeichnungen. Dabei zeigen:
- Fig. 1: eine schematische Schrägansicht der auf einem zylindrischen Rohr aufliegenden Bearbeitungsvorrichtung gemäß einer bevorzugten Ausführungsform der Erfindung;
- Fig. 2: eine schematische Schrägansicht eines Kettenglieds mit Antriebseinrichtung und Motor gemäß einer bevorzugten Ausführungsform der Erfindung;
- Fig. 3: eine schematische Schrägansicht des Kettenglieds gemäß Fig. 2 mit verbundenem Motor;
- Fig. 4: ein Bausatz zum Herstellen einer Bearbeitungsvorrichtung gemäß einer bevorzugten Ausführungsform der Erfindung;
- Fig. 5: eine schematische Schrägansicht einer Schälkette des Standes der Technik;
- Fig. 6: eine schematische Schrägansicht der auf einem zylindrischen Rohr aufliegenden Bearbeitungsvorrichtung gemäß einer weiteren bevorzugten Ausführungsform der Erfindung; und
- Fig. 7, 8: weitere perspektivische Ansichten der in Fig. 6 dargestellten Bearbeitungsvorrichtung.

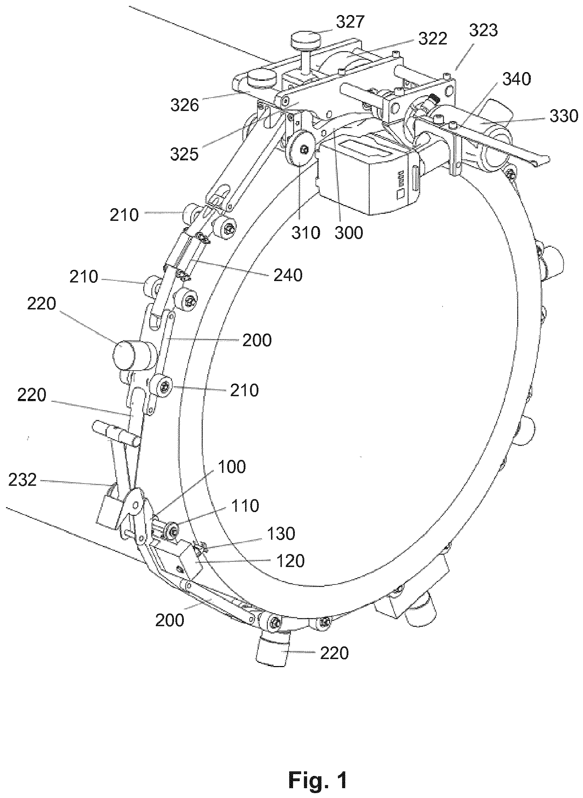

Fig. 1 zeigt eine Bearbeitungsvorrichtung zum zumindest abschnittsweisen Bearbeiten der Mantelfläche eines wenigstens annähernd zylindrischen Gegenstands gemäß einer bevorzugten Ausführungsform der Erfindung. Die Bearbeitungsvorrichtung umfasst mehrere miteinander gelenkig zu einer Kette verbindbare Kettenglieder 100, 200, 300, die wenigstens teilweise Laufrollen 110, 210, 310 aufweisen, um auf einer vorzugsweise rotationssymmetrischen Auflagefläche wie der Mantelfläche eines zu bearbeitenden Rohrs R abzurollen.

Die Kette umfasst einen Werkzeugträger 120. In der in Fig. 1 dargestellten Ausführungsform weist das Kettenglied 100 einen Werkzeugträger 120 sowie ein Paar Laufrollen 110 auf. Der Werkzeugträger 120 dient zum Tragen und Führen eines Werkzeugs 130 zum Bearbeiten bzw. Abschälen der Mantelfläche des Rohrs R. In der in Fig. 1 gezeigten Ausführungsform handelt es sich bei dem Werkzeug 130 um ein am Werkzeugträger 120 befestigtes Schälmesser. Anstelle des feststehenden Schälmessers kann auch ein motorbetriebener Hobel am Werkzeugträger 120 befestigt sein. Unabhängig von der Art des Werkzeugs 130 ist der Abstand des Werkzeugs 130 von der Auflagefläche, insbesondere der Mantelfläche des Rohrs R, vorzugsweise stufenlos variabel einstellbar. Darüber hinaus ist das Werkzeug 130 federbeaufschlagt, um es auf der Oberfläche des Rohres zu halten. Hierdurch können Ovalitäten und/oder Unebenheiten gut bearbeitet werden.

Ferner umfasst die Kette eine Kopplungseinrichtung K. In der in Fig. 1 dargestellten Ausführungsform ist das Kettenglied 300 mit der Kopplungseinrichtung K sowie zwei Paare an Laufrollen 310 versehen. Die Kopplungseinrichtung K weist ein Kupplungsteil 323 zum Verbinden mit einem Motor 330 und Übertragen der Rotationsbewegung vom Motor 330 auf die Kopplungseinrichtung K, vorzugsweise auf eine in Fig. 1 nicht sichtbare Antriebswelle 321 der Kopplungseinrichtung K. Vorzugsweise ist eine Antriebsrolle 322 drehfest auf und koaxial zur Antriebswelle 321 angeordnet. Die Rotationsachse der Antriebswelle 321 bzw. der Antriebsrolle 322 verläuft vorzugsweise im Wesentlichen parallel zur zentralen Achse des geschlossenen Kettenrings.

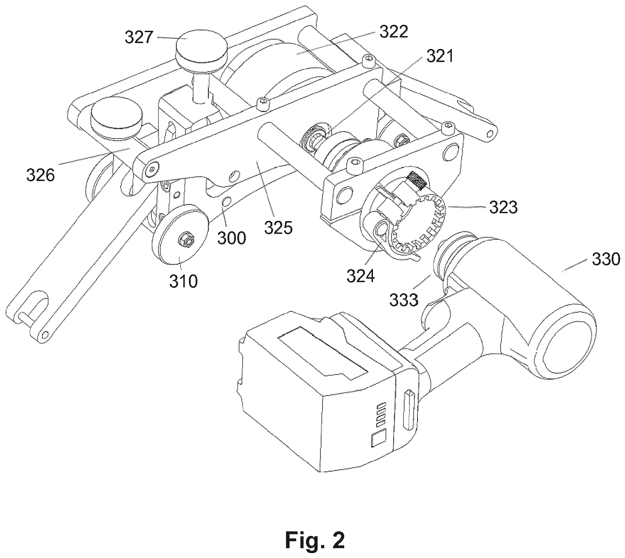

In einer bevorzugten Ausführungsform weist die Kopplungseinrichtung K eine Lagereinrichtung 325, 326 zur rotierenden Lagerung der Antriebswelle auf (vgl. auch Fig. 2). Diese umfasst zwei zur Rotationsachse der Antriebsrolle 322 senkrecht stehende Lagerschenkel 325, die zur rotierenden Lagerung der Antriebswelle am Kettenglied 300 vorgesehen sind. Vorzugsweise ist je ein Lagerschenkel 325 einer Stirnseite der Antriebsrolle 322 zugewandt und mittels Abstandshalter 326 von den Stirnseiten beabstandet, um einen freien Lauf der Antriebsrolle 322 zu gewährleisten.

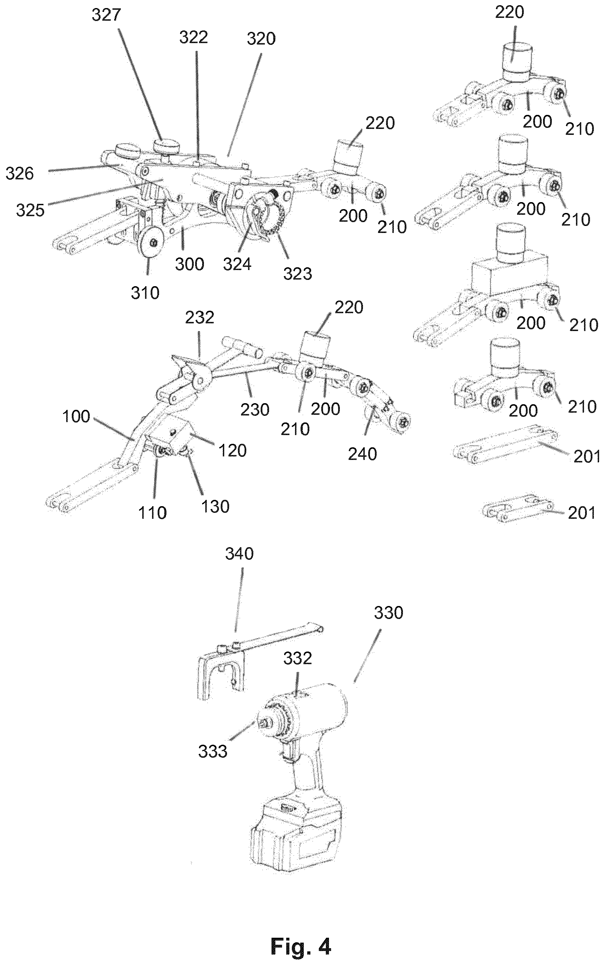

Im Betrieb wird die Antriebswelle 321 mittels dem mit dem Kupplungsteil 323 verbundenen Motor 330 angetrieben. In der in Fig. 1 dargestellten Ausführungsform ist der Motor 330 ein handelsüblicher akkubetriebener Bauschrauber. Die Motordrehzahl des Bauschraubers ist mittels eines über einen Handschalter betätigten Stellelements einstellbar. Um eine gleichbleibende Drehzahl zu halten, kann der Handschalter in einer gedrückten Position stufenlos mittels einer Fixiereinrichtung 340 fixiert werden (vgl. Fig. 4). Mittels eines Richtungsschalters kann optional die Rotationsrichtung umgekehrt werden. Bei dem Motor 330 kann es sich grundsätzlich um ein beliebiges, vorzugsweise kabellos betriebenes Elektrogerät handeln. Vorzugsweise ist der Motor 330 ein handelsübliches Elektrogerät wie beispielsweise der oben beschriebene Bauschrauber, eine Bohrmaschine oder ein Winkelschleifer. Derartige Geräte sind im Handel mit wechselbarem Bohrfutter erhältlich und werden für die Zwecke der hier beschriebenen Ausführungsform vorzugsweise ohne Bohrfutter eingesetzt.

In einer bevorzugten Ausführungsform kann der Abstand der Lagereinrichtung 325, 326 und dadurch der Abstand der der Antriebsrolle 322 von der Auflagefläche mittels einer Verstelleinrichtung variiert werden, d.h. der Mantelfläche des zu bearbeitenden Gegenstands genähert oder von dieser abgehoben werden. Die Rotationsachse der Antriebsrolle 322 wird dabei vorzugsweise im Wesentlichen parallel zur Achse des zu bearbeitenden Gegenstandes bzw. zur zentralen Achse des Kettenrings gehalten. Hierzu kann die Antriebsrolle 322 an dem Kettenglied 300 über eine im Wesentlichen parallel zur zentralen Achse des Kettenrings verlaufende und parallel zur Rotationsachse der Antriebsrolle 322 versetzte Lagerachse verschwenkbar gelagert sein. Durch das Verschwenken kann auch ein einfaches Wechseln der Antriebsrolle 322 erreicht werden.

In der hier dargestellten bevorzugten Ausführungsform sind zu diesem Zweck die Lagerschenkel 325 zur rotierenden Lagerung der Antriebswelle 321 am Kettenglied 300 verschwenkbar gelagert. Die Lagerachse ist zur Rotationsachse der Antriebswelle im Wesentlichen parallel versetzt, so dass ein Verschwenken der Lagerschenkel 325 um die Lagerachse eine Bewegung der Lagereinrichtung 325, 326 und somit ein Bewegen der Antriebsrolle 322 relativ zur Mantelfläche des zu bearbeitenden Gegenstands hervorruft.

Mittels einer optional vorgesehenen Arretiereinrichtung kann eine gewünschte Verschwenkungsposition der Lagereinrichtung 325, 326 gehalten werden, d.h., ein unbeabsichtigtes Verschwenken aus der gewünschten Position verhindert werden. Dadurch kann ein einwandfreies Bearbeitungsergebnis auch bei Schwankungen in der Fertigungsgenauigkeit oder einem Abtragen der Lauffläche der Antriebsrolle 322 erreicht werden. In der hier dargestellten Ausführungsform weist die Arretiereinrichtung eine Stellschraube 327 abseits der Lagerachse auf, die eine durch Drehen der Stellschraube 327 längenverstellbare Verbindung zwischen der Verstelleinrichtung, insbesondere der Lagerschenkel 325, und dem Kettenglied 300 bildet.

Die Verstelleinrichtung kann optional federnd ausgebildet sein. Eine Spannfeder kann mit den schwenkbar gelagerten Lagerschenkeln 325 in Eingriff gebracht werden, um diese elastisch in Richtung der Mantelfläche zu drängen, so dass die Antriebsrolle 322 mit einer im Wesentlichen konstanten Kraft auf die Auflagefläche wie beispielsweise die Mantelfläche des zu bearbeitenden Rohrs R gedrückt wird. In einer Abwandlung dieser Ausführungsform ist es auch möglich, die Spannfeder wegzulassen und den Schwenkmechanismus der Verstelleinrichtung fest mit der Arretiereinrichtung zu koppeln, so dass die Lage der Antriebsrolle 322 bezüglich des Kettenglieds 300 durch die Stellung der Arretiereinrichtung genau bestimmt wird und kein federbelastetes Spiel aufweist. In einer weiteren Abwandlung der Ausführungsform ist es auch möglich einen linearen Schiebemechanismus (beispielsweise eine Nut und ein darin geführtes Gegenstück) statt des beschriebenen Schwenkmechanismus vorzusehen, um die Antriebsrolle 322 in Richtung zu der Mantelfläche und von dieser weg zu bewegen. Auch ein solcher Schiebemechanismus kann vorzugsweise federnd ausgebildet und mit der beschriebenen Arretiereinrichtung versehen sein.

In einer Weiterentwicklung der Erfindung ist die Lagerreinrichtung 325, 326 so ausgebildet, dass sie bei Bedarf zusätzlich ein Kippen der Antriebsrolle 322 um eine in Tangentialrichtung der Mantelfläche verlaufende Kippachse ermöglicht, so dass die Rotationsachse der Antriebsrolle 322 bezüglich der zentralen Achse des Kettenrings und somit bezüglich der Achse des zu bearbeitenden Rohres R geneigt werden kann. Die Antriebsrolle 322 kann somit z.B. mittels einer weiteren Federeinrichtung auf eine nicht zylindrische bzw. kegelförmige Mantelfläche gedrückt werden, um auch diese zu bearbeiten. Solche im Wesentlichen kegelförmigen Mantelflächen können an den Enden eines zu bearbeitenden Rohrs R vorkommen, falls ein Rohr R dementsprechend bearbeitet oder ausgebildet wurde, oder falls das Rohr R eingefallene Rohrenden aufweist.

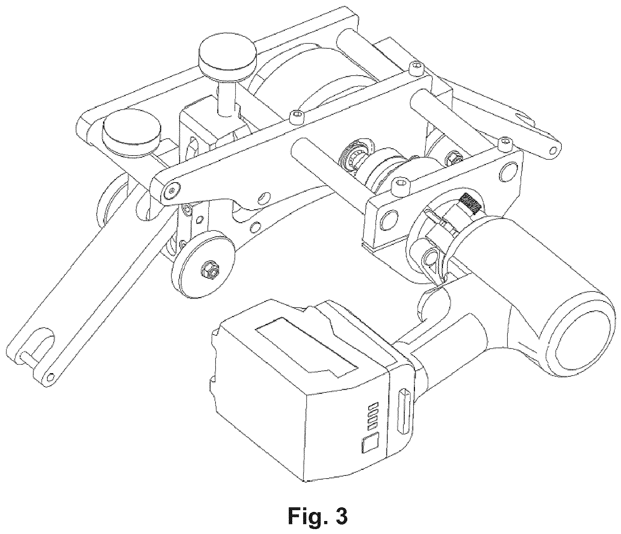

Ferner kann ein Kettenglied eine Spanneinrichtung aufweisen, wie z.B. einen Spanngurt 230 und ein Spannschloss 232 ähnlich wie bei der oben beschriebenen herkömmlichen Schälkette, um die Umlauflänge des geschlossenen Kettenrings genauer an den Umfang des Rohrs R anzupassen und den Kettenring mit einem einstellbaren Anpressdruck auf bzw. um die Mantelfläche zu spannen. In der in der Fig. 3 gezeigten Ausführungsform weist der Werkzeugträger 100 die Spanneinrichtung 230, 232 auf und ist mittels seines Spannschlosses 232 an einem Kettenglied angelenkt. Zur einfacheren Einstellung des Anpressdrucks können an einem Kettenglied eine Federeinrichtung 240 und eine vorteilhafterweise an der Federeinrichtung 240 ausgebildete (nicht gezeigte) Mess- und Darstellungseinrichtung, die die Spannung der Kette anzeigt, vorgesehen sein. Die Spanneinrichtung kann gleichzeitig auch lösbar sein und als Verschlusseinrichtung zum Öffnen und Schließen des Kettenrings dienen. Alternativ zu dem Spanngurt kann die Spanneinrichtung beispielsweise auch einen Gewindestangen-Mechanismus oder dergleichen mit einstellbarer Länge umfassen.

Optional kann ein oder mehrere Kettenglieder Griffe 220 aufweisen, um die Montage und Ausrichtung der Bearbeitungsvorrichtung zu erleichtern. Zudem kann eine festgefahrene Bearbeitungsvorrichtung einfach von Hand gelöst werden, indem eine Bedienungsperson die Kette manuell in Laufrichtung, d.h. in Umfangsrichtung um die Rohrachse, oder in entgegengesetzter Richtung bewegt.

In einer weiteren Ausgestaltung der Erfindung ist an einem Kettenglied 100, 200, 300 eine Vorschubeinstelleinrichtung (nicht dargestellt) ausgebildet. Die Vorschubeinstelleinrichtung weist in der bevorzugten Ausführungsform eine an einem Kettenglied ausgebildete Nut als Führungsmittel und ein in die Nut eingreifendes Führungsstück als Führungsgegenmittel auf, das längs der Nut beweglich ist. Die Nut ist im Wesentlichen parallel zur zentralen Achse des geschlossenen Kettenrings ausgerichtet. Das Führungsstück ist stufenlos in der Nut beweglich und kann mittels einer nicht gezeigten Festlegungseinrichtung wie z.B. einer Klemmschraube in jeder Stellung an bzw. in der Nut festgelegt und wieder gelöst werden. An dem Führungsstück ist bei geschlossenem Kettenring ein Kettenglied 100, 200, 300 mit einem seiner Enden angelenkt. Das Führungsstück kann auch fest an einem Kettenglied 100, 200, 300 angelenkt sein.

In einer bestimmten Stellung innerhalb der Nut, die eine Randstellung bzw. Endstellung an einem Ende der Nut sein kann, ist das Führungsstück in Laufrichtung des ersten Kettenglieds 100, 200, 300 mit einem an der gegenüberliegenden Seite des Kettenglied 100, 200, 300 angelenkten Ende eines zweiten Kettenglieds 100, 200, 300 fluchtend angeordnet. Das heißt, die axiale Position (die Position in Richtung der Achse des geschlossenen Kettenrings bzw. der Achse des zu bearbeitenden Gegenstands) des am Führungsstück angelenkten Endes des ersten Kettenglieds 100, 200, 300 ist gleich der axialen Position des zugewandten Endes des zweiten Kettenglieds 100, 200, 300, so dass der geschlossene Kettenring einen Kreisring ohne axialen Versatz bildet. In dieser Einstellung läuft der Kettenring auf einer Kreislinie der Mantelfläche um das Rohr R, wobei alle Laufrollen 110, 210, 310 der Kettenglieder 100, 200, 300 im Wesentlichen in Richtung dieser Kreislinie ausgerichtet sind und entlang derselben abrollen.

In anderen, davon abweichenden Stellungen des Führungsstücks innerhalb der Nut ist das am Führungsstück angelenkte Ende des ersten Kettenglieds 100, 200, 300 bezüglich des ihm zugewandten Endes des zweiten Kettenglieds 100, 200, 300 axial verschoben bzw. verstellt. Der Kettenring bildet dann eine Schraubenlinie mit einer Steigung gleich dem axialen Versatz der einander zugewandten Enden der Kettenglieder. Alle Laufrollen 110, 210, 310 der Kettenglieder 100, 200, 300 sind somit entlang dieser Schraubenlinie ausgerichtet und rollen entlang dieser Schraubenlinie auf der Mantelfläche des Rohrs R ab. Bei einem vollständigen Umlauf ergibt sich somit ein Vorschub der Bearbeitungsvorrichtung in axialer Richtung ungefähr gleich dem axialen Versatz der einander zugewandten Enden der Kettenglieder 100, 200, 300 an der Vorschubeinstelleinrichtung. Dabei tritt an den Laufrollen 110, 210, 310 im Wesentlichen kein seitlicher bzw. axialer Schlupf auf und alle aufsitzenden Laufrollen 110, 210, 310 tragen zum Vorschub bei. Auf diese Weise ergibt sich ein sehr zuverlässiger und gleichmäßiger Vorschub in axialer Richtung, wobei auch der Kraftaufwand für die Bewegung in Umfangsrichtung im Vergleich zur herkömmlichen Schälkette deutlich reduziert ist, da kein axiales Gleiten von Laufrollen 110, 210, 310 quer zur Umfangsrichtung erzwungen werden muss. Bei der hier vorliegenden Ausführungsform sind die Vorschubrollen 110 gegen die Rotationsachse winklig verstellt.

Die Vorschubeinstelleinrichtung weist vorzugsweise außerdem eine Mess- und Darstellungseinrichtung auf, die den eingestellten Vorschub misst und anzeigt, so dass die Bedienungsperson den Vorschub leicht einstellen und die Einstellung jederzeit leicht ablesen kann. Diese Mess- und Darstellungseinrichtung ist in der bevorzugten Ausführungsform durch eine Skala an der Nut verwirklicht, auf die eine Markierung am Führungsstück zeigt. Auf der Skala ist das Vorschubmaß vorzugsweise als einfaches Längenmaß z.B. in der Maßeinheit mm oder dergleichen angegeben, was der Steigung der von dem Kettenring gebildeten Schraubenlinie und somit im Wesentlichen dem Vorschubmaß in axialer Richtung bei genau einem Umlauf der Bearbeitungsvorrichtung um das zu bearbeitende Rohr entspricht.

Wenn die Kettenglieder 100, 200, 300 zu dem geschlossenen Kettenring verbunden sind, sind die Laufrollen 110, 310, 210 aller Kettenglieder in derselben Laufrichtung ausgerichtet, nämlich in Umfangsrichtung des Kettenrings, um im Wesentlichen in Umfangsrichtung um die Mantelfläche des Rohrs R abzurollen, so dass das Werkzeug 130 sowie die Antriebsrolle 322 im Gebrauch um die Rohrachse umläuft.

Fig. 2 zeigt eine vergrößerte Darstellung des in Fig. 1 dargestellten Kettenglieds 300 mit der Kopplungseinrichtung K und Kupplungsteil 323 zum Herstellen einer lösbaren Verbindung mit dem Motor 330.

Vorzugsweise weist hierzu das Kupplungsteil 323 ein bezüglich der Antriebswelle 321 unbewegliches erstes Kupplungselement sowie ein mit der Antriebswelle 321 drehfest verbundenes und rotierbares zweites Kupplungselement auf. Der Motor 330 weist ein Kupplungsgegenteil 333 mit einem bezüglich der Rotationsachse des Motors 330 unbeweglichen ersten Kupplungsgegenelement und einem rotierbaren zweiten Kupplungsgegenelement auf. Werden das Kupplungsteil 323 und das Kupplungsgegenteil 333 miteinander verbunden, so werden das erste Kupplungselement mit dem ersten Kupplungsgegenelement und das zweite Kupplungselement mit dem zweiten Kupplungsgegenelement in Eingriff gebracht. Dadurch wird einerseits verhindert, dass sich der Motor 330 um die Rotationsachse dreht, und andererseits gewährleistet, dass die Rotationsbewegung des Motors 330 auf die Antriebswelle 321 übertragen wird.

In einer bevorzugten Ausführungsform ist das erste (unbewegliche) Kupplungselement des Kupplungsteils 323 mit einem Schenkel 325 zumindest drehfest und bevorzugt starr verbunden. Die Antriebswelle 321 erstreckt sich durch einen in einem Schenkel 325 vorgesehenen Durchbruch und ist mit dem zweiten Kupplungselement drehfest verbunden.

In der hier dargestellten Ausführungsform ist das erste Kupplungselement als offener Hohlkörper ausgebildet, der auf der inneren Mantelfläche Einkerbungen aufweist. Das erste Kupplungsgegenelement des Kupplungsgegenteils 333 ist als ein dem offenen Hohlkörper im Wesentlichen entsprechender geometrischer Körper ausgebildet, der auf der äußeren Mantelfläche zu den Einkerbungen korrespondierende Vorsprünge aufweist. Eine optional vorgesehene am Kupplungsteil 323 vorgesehene Klemmvorrichtung 324 kann den Öffnungsdurchmesser des Hohlkörpers ausgehend von einer Ruheposition reduzieren, um in einer Klemmposition die Einkerbungen und Vorsprünge gegeneinander zu drängen und den Motors 330 mit der Kopplungseinrichtung K fest zu verbinden. In der dargestellten Ausführungsform haben das erste Kupplungselement und das erste Kupplungsgegenelement eine im Wesentlichen zylindrische Geometrie. Es sind jedoch weitere Geometrien wie beispielsweise eine Kegelstumpfform denkbar.

Wie aus Fig. 2 und 3 ersichtlich ist, werden das Kupplungsteil 323 und das Kupplungsgegenteil 333 ineinandergesteckt und bei Bedarf mittels optionaler Klemmvorrichtung 324 verklemmt, um eine lösbare Verbindung zwischen der Antriebseinrichtung und dem Motor 330 herzustellen. Im verbundenen und optional verklemmten Zustand sind die Rotationsachse der Antriebswelle 321 und Rotationsachse des Motors 330 vorzugsweise koaxial.

Fig. 4 zeigt einen Bausatz zum Herstellen einer Bearbeitungsvorrichtung zum zumindest abschnittsweisen Bearbeiten der Mantelfläche eines wenigstens annähernd zylindrischen Gegenstands gemäß einer bevorzugten Ausführungsform der Erfindung. Der Bausatz umfasst oben beschriebene Kettenglieder 100, 300, die gelenkig miteinander verbindbar sind, so dass sie wie in Fig. 1 dargestellt einen geschlossenen Kettenring bilden und einen im Wesentlichen zylindrischen, zu bearbeitenden Gegenstand, wie z.B. ein Kunststoffrohr R, ringförmig umschließen können.

Kettenglieder 200 können der Kette in beliebiger Anzahl, bei Bedarf mittels Kettenverbindungselemente 201, hinzugefügt werden, um die Kette an größere Rohrdurchmesser anzupassen. Optional enthält der Bausatz deshalb Kettenglieder 200 und/oder Kettenverbindungselemente 201. Diese können unterschiedliche Längen zur weiteren Längenanpassung aufweisen. Wie in Fig. 4 dargestellt ist, können ein oder mehr Kettenglieder 100, 200, 300, insbesondere Kettenglied 100 und/oder Kettenglied 300 optional bereits mit einem oder mehreren Kettengliedern 200 vorverbunden sein. Optional enthält der Bausatz weiterhin oben beschriebenen Motor 330 und/oder oben beschriebene Fixiereinrichtung 340.

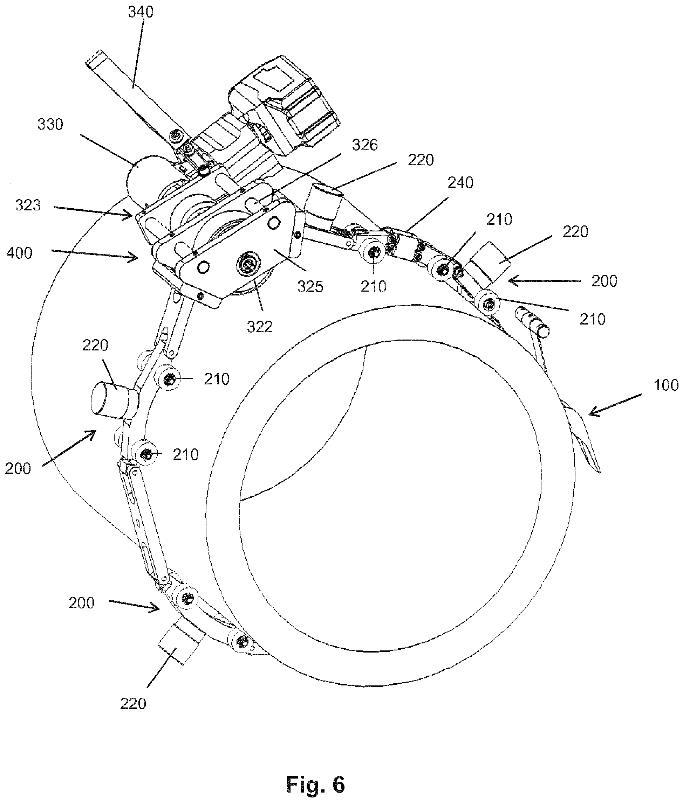

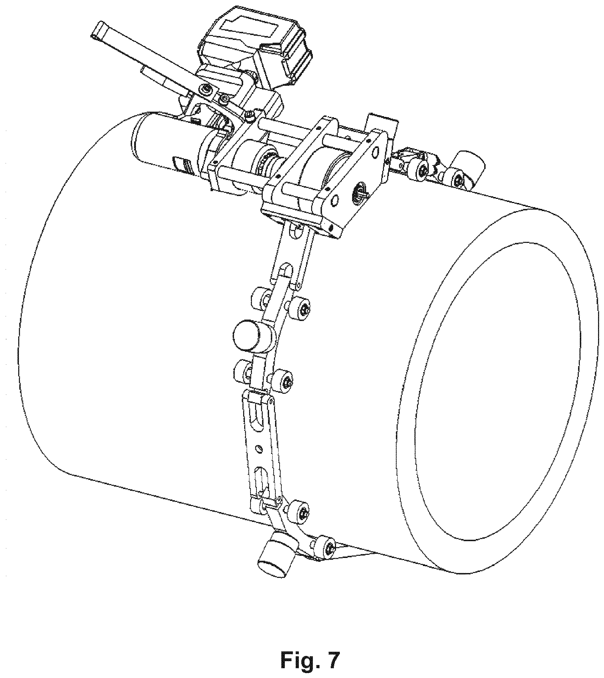

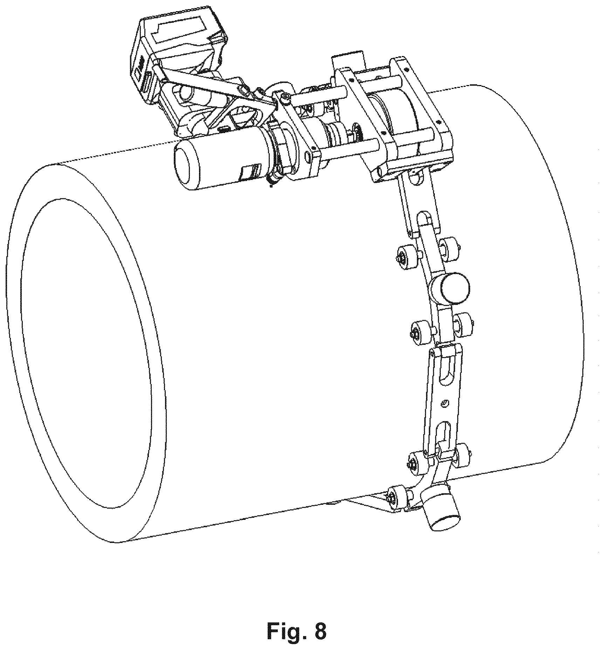

Fig. 6 bis 8 zeigen eine gegenüber der in den Fig. 1 bis 4 dargestellten und oben näher beschriebenen Ausführungsform modifizierte Bearbeitungsvorrichtung gemäß einer weiteren bevorzugten Ausführungsform der Erfindung. Soweit die Bearbeitungsvorrichtung der zuvor beschriebenen Ausführungsform entspricht, wird auf die entsprechenden Ausführungen oben verwiesen. Wie den Fig. 6 bis 8 entnommen werden kann, wird das Kettenglied 400 von der Antriebsrolle 322 auf der Mantelfläche des zu bearbeitenden Rohres abgestützt, so dass auf Laufrollen am Kettenglied 400 verzichtet werden kann. Wenn das Kettenglied 400 von der Antriebsrolle 322 auf der Mantelfläche des zu bearbeitenden Rohres abgestützt wird, ergibt sich als weiterer Vorteil, dass ein einwandfreies Bearbeitungsergebnis auch ohne Arretiereinrichtung erreicht werden kann, selbst wenn Schwankungen in der Fertigungsgenauigkeit oder einem Abrieb der Lauffläche der Antriebsrolle 322 vorliegen.

## Patentansprüche

1. Bearbeitungsvorrichtung zum zumindest abschnittsweisen Bearbeiten der Mantelfläche eines wenigstens annähernd zylindrischen Gegenstands, enthaltend:
mindestens zwei gelenkig miteinander zu einer ringförmigen Kette zum Umschließen des zu bearbeitenden Gegenstandes verbindbaren Kettengliedern (100, 200, 300, 400) mit Laufrollen (110, 210, 310) zum Abrollen auf der Mantelfläche,
und
einen Werkzeugträger (120) zum Tragen und Führen eines zum Bearbeiten der Mantelfläche ausgebildeten Werkzeugs (130),
**gekennzeichnet durch** eine Kopplungseinrichtung mit einem Kupplungsteil (323) zum Herstellen einer lösbaren Verbindung mit einem Motor (330) zum Bewegen der Bearbeitungsvorrichtung in Umfangsrichtung des zu bearbeitenden Gegenstandes.

2. Bearbeitungsvorrichtung nach Anspruch 1,
wobei die Kopplungseinrichtung ferner eine mit einer Antriebswelle (321) drehfest verbundene Antriebsrolle (322) und eine Lagereinrichtung (325, 326) zur rotierenden Lagerung der Antriebswelle aufweist,
wobei die Lagereinrichtung (325, 326) vorzugsweise drehfest und insbesondere starr mit einem ersten Kupplungselement des Kupplungsteils (323) verbunden ist.

3. Bearbeitungsvorrichtung nach Anspruch 1 oder 2,
wobei die Antriebsrolle (322) ausgestaltet ist, die Kopplungseinrichtung von der Mantelfläche des zu bearbeitenden Gegenstandes abzustützen, und
wobei die Antriebsrolle (322) vorzugsweise an einem Kettenglied (400) ohne Laufrollen befestigt ist.

4. Bearbeitungsvorrichtung nach Anspruch 2 oder 3,
wobei die Lagereinrichtung (325, 326) mindestens einen und vorzugsweise mindestens zwei zur Rotationsachse der Antriebsrolle (322) schräg, insbesondere im Wesentlichen senkrecht stehende Lagerschenkel (325) zur rotierenden Lagerung der Antriebswelle (321) aufweist und
das erste Kupplungselement des Kupplungsteils (323) mit zumindest einem Lagerschenkel (325) drehfest und vorzugsweise starr verbunden ist.

5. Bearbeitungsvorrichtung nach einem der Ansprüche 2 bis 4,
wobei das erste Kupplungselement bezüglich der Antriebswelle (321) unbeweglich ist und das Kupplungsteil (323) ferner ein mit der Antriebswelle (321) drehfest verbundenes und rotierbares zweites Kupplungselement zur Aufnahme der Rotationsbewegung aufweist.

6. Bearbeitungsvorrichtung nach einem der Ansprüche 2 bis 5,
wobei der Abstand der Lagereinrichtung (325, 326) von der Mantelfläche mittels einer Verstelleinrichtung veränderbar ist und optional mittels einer Arretiereinrichtung feststellbar ist.

7. Bearbeitungsvorrichtung nach einem der Ansprüche 2 bis 6,
wobei die Lagereinrichtung (325, 326) an einem ersten Kettenglied (300) der mindestens zwei Kettenglieder (100, 200, 300) verschwenkbar gelagert ist.

8. Bearbeitungsvorrichtung nach einem der vorhergehenden Ansprüche,
wobei die mindestens zwei Kettenglieder (100, 200, 300) eine, zwei oder alle der nachfolgenden Einrichtungen aufweisen:
eine Abtasteinrichtung zur Bestimmung des Querschnittsendes oder eines Querschnittendpunktes des zu bearbeitenden Gegenstandes und/oder zur Erfassung der Manteltopologie, wobei die Abtasteinrichtung vorzugsweise mit einer Abschalteinrichtung funktional gekoppelt ist, um bei einer erfassten Signaländerung die Rotationsbewegung der Laufrolle (322) zu verändern;
eine Spanneinrichtung zum Anpassen der Umlauflänge der Bearbeitungsvorrichtung an den Umfang des zu bearbeitenden Gegenstands und/oder zum Einstellen des Anpressdrucks der Bearbeitungsvorrichtung auf die Mantelfläche;
eine Vorschubeinstelleinrichtung, die in der Lage ist, eine axiale Position von zueinander weisenden Enden zweier Kettenglieder parallel zur Achse des geschlossenen Kettenrings zueinander reversibel zu verstellen.

9. Bearbeitungsvorrichtung nach einem der vorhergehenden Ansprüche, die mit dem Motor (330) verbunden ist,
wobei der Motor (330) eine Motorwelle sowie ein Kupplungsgegenteil (333) zum Verbinden mit dem Kupplungsteil (323) der Kopplungseinrichtung oder mit einem zwischen Kupplungsgegenteil (333) und Kupplungsteil (323) angeordneten Adapter aufweist.

10. Bearbeitungsvorrichtung nach Anspruch 9,
wobei das Kupplungsgegenteil (333) ein bezüglich der Motorwelle unbewegliches erstes Kupplungsgegenelement und ein sich mit Motorwelle drehendes zweites Kupplungsgegenelement aufweist und
das erste Kupplungselement mit dem ersten Kupplungsgegenelement und das zweite Kupplungselement mit dem zweiten Kupplungsgegenelement in Eingriff gebracht sind.

11. Bearbeitungsvorrichtung nach Anspruch 9 oder 10,
wobei der Motor kabellos und vorzugsweise Bestandteil eines akkubetriebenen Bauschraubers ist.

12. Kettenglied (300) für eine Bearbeitungsvorrichtung zum zumindest abschnittsweisen Bearbeiten der Mantelfläche eines wenigstens annähernd zylindrischen Gegenstands, das vorzugsweise mindestens ein Paar Laufrollen (310) zum Abrollen auf der Mantelfläche und eine Kopplungseinrichtung aufweist, wobei die Kopplungseinrichtung ein Kupplungsteil (323) zum Herstellen einer lösbaren Verbindung mit einem Motor (330) und Übertragen der Rotationsbewegung vom Motor (330) auf die Kopplungseinrichtung zur Bewegung der Bearbeitungsvorrichtung in Umfangsrichtung des zu bearbeitenden Gegenstandes aufweist,
wobei die Kopplungseinrichtung vorzugsweise wie in einem der Ansprüche 2 bis 10 definiert ausgestaltet ist.

13. Kettenglied (300) nach Anspruch 12, das mit dem Motor (330) verbunden ist,
wobei der Motor (330) vorzugsweise wie in einem der Ansprüche 9 bis 11 definiert ausgestaltet ist.

14. Bausatz zum Herstellen einer Bearbeitungsvorrichtung zum zumindest abschnittsweisen Bearbeiten der Mantelfläche eines wenigstens annähernd zylindrischen Gegenstands, enthaltend:
ein erstes Kettenglied (100), das einen Werkzeugträger (120) zum Tragen und Führen eines Werkzeugs (130) zum Bearbeiten der Mantelfläche aufweist,
ein zweites Kettenglied (300), das eine Kopplungseinrichtung aufweist, wobei die Kopplungseinrichtung ein Kupplungsteil (323) zum Herstellen einer lösbaren Verbindung mit einem Motor (330) und Übertragen der Rotationsbewegung vom Motor (330) auf die Kopplungseinrichtung zur Bewegung der Bearbeitungsvorrichtung in Umfangsrichtung des zu bearbeitenden Gegenstandes aufweist, und
optional ein oder mehr Kettenglieder (200) als Kettenverbindungsglieder,
wobei die Kettenglieder (100, 200, 300) gelenkig miteinander zu einer ringförmigen Kette zum Umschließen des zu bearbeitenden Gegenstandes verbindbar sind und wenigstens teilweise Laufrollen (110, 210, 310) zum Abrollen auf der Mantelfläche aufweisen,
wobei die Kopplungseinrichtung vorzugsweise wie in einem der Ansprüche 2 bis 10 definiert ausgestaltet ist.

15. Bausatz nach Anspruch 14, der ferner den Motor (330) und optional eine Fixiereinrichtung (340) zur Einstellung der Motordrehzahl des Motors aufweist, wobei der Motor (330) vorzugsweise wie in einem der Ansprüche 9 bis 11 definiert ausgestaltet ist.
